# EUROPEAN PATENT APPLICATION

(11) **EP 4 464 509 A1**
(43) Date of publication of application: **20.11.2024**
(21) Application number: 22920673.5
(22) Date of filing: 28.12.2022
(51) Int. Cl.: B32B 25/08, B32B 25/20, B32B 27/00, B32B 27/30

(54) **LAMINATE AND PRODUCTION METHOD THEREFOR**

(30) Priority: 13.01.2022 JP 2022003444
(71) Applicant: NOK Corporation, Tokyo 1058585 (JP)
(72) Inventor: YOSHIDA, Shizuki, Fujisawa-shi, Kanagawa 2510042 (JP); FUTASHIMA, Ryo, Fujisawa-shi, Kanagawa 2510042 (JP)
(74) Representative: Global IP Europe Patentanwaltskanzlei
(86) International application number: PCT/JP2022/048473
(87) International publication number: WO 2023/136157

(57) **Abstract**

A method for producing a laminate includes: a first applying step of applying a first adhesive to a first surface of a first member, the first member being made of silicone rubber, the first adhesive including a silane coupling agent having epoxy groups; a second applying step of applying a second adhesive to a second surface of a second member, the second member being made of polystyrene, the second adhesive including a silane coupling agent having amino groups; and a bonding step of the first surface of the first member and the second surface of the second member to each other with the first adhesive and the second adhesive.

## Description

### TECHNICAL FIELD

The present invention relates to a technique for bonding a plurality of members to each other.

### BACKGROUND ART

There has been conventionally proposed a technique for bonding a plurality of members, which are made of different materials, using a silane coupling agent. For example, Patent Document 1 discloses a technique in which a sheet made of silicone rubber and a sheet made of a resin material or of a metallic material are bonded to each other by a single type of silane coupling agent.

### Related Art Document

### Patent Document

Patent Document 1: Japanese Patent Application Laid-Open Publication No. 2014-62224

### SUMMARY OF THE INVENTION

### Problem to be Solved by the Invention

However, in a state in which a single type of silane coupling agent is used, it is difficult to sufficiently ensure durability of bonding between members, and a problem such as detachment of one of the members from another member tends to occur, particularly in high humidity environments. In view of the above circumstances, an object of one aspect of this disclosure is to sufficiently ensure durability of bonding of a first member and a second member to each other.

### Means for Solving Problem

A laminate according to one aspect of the present invention includes: a first member made of silicone rubber; a second member made of polystyrene; and an adhesive layer bonding a first surface of the first member and a second surface of the second member to each other, in which the adhesive layer includes: a first layer disposed on the first surface, the first layer being made of a silane coupling agent having epoxy groups; and a second layer disposed on the second surface, the second layer being made of a silane coupling agent having amino groups.

A method of producing a laminate according to another aspect of the present invention includes: a first applying step of applying a first adhesive to a first surface of a first member, the first member being made of silicone rubber, the first adhesive including a silane coupling agent having epoxy groups; a second applying step of applying a second adhesive to a second surface of a second member, the second member being made of polystyrene, the second adhesive including a silane coupling agent having amino groups; and a bonding step of the first surface of the first member and the second surface of the second member to each other with the first adhesive and the second adhesive. The order of the first applying step and the second applying step may be freely selected. For example, the aspect described above includes a mode in which the second applying step is carried out after the first applying step is carried out, a mode in which the first applying step is carried out after the second applying step is carried out, or a mode in which the first applying step and the second applying step are carried out in part or entirely in parallel.

### Effects of Invention

According to the present invention, it is possible to sufficiently secure durability of bonding of a first member and a second member to each other.

### BRIEF DESCRIPTION OF THE DRAWINGS

Fig. 1 is a cross section of a laminate according to an embodiment.
Fig. 2 is an explanatory diagram showing bonding of a first member and a second member to each other.
Fig. 3 is a flowchart showing a production process of the laminate.

### MODES FOR CARRYING OUT THE INVENTION

### A: Laminate

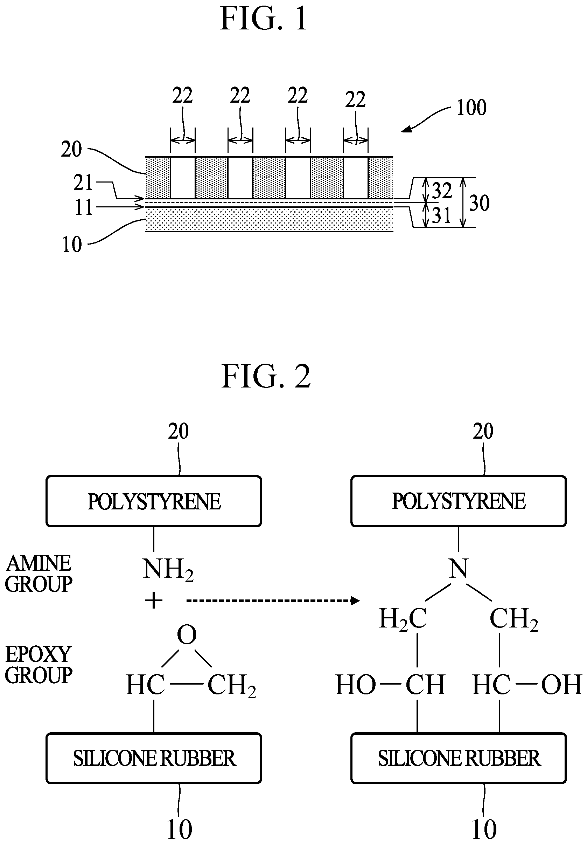

Fig. 1 is a cross section of a laminate 100 according to an embodiment of the present invention. The laminate 100 according to this embodiment is, for example, a well plate that is used for culturing various types of cells (more particularly, spheroids), and includes a first member 10, a second member 20, and an adhesive layer 30.

The first member 10 is a thin plate-shaped molded body made of silicone rubber. In other words, the first member 10 is a member including a silicone rubber material. The silicone rubber is, for example, polydimethylsiloxane (PDMS). The first member 10 includes a first surface 11. The first surface 11 is provided with a large number of small recesses (not shown). The recesses are each a hemispherical recess having a diameter of about 1 millimeter, for example.

The second member 20 is a thin plate-shaped molded body made of polystyrene (PS). In other words, the second member 20 is a member including a polystyrene material. The first member 10 is made of a resin material, and the second member 20 is made of another type of resin material. An outer dimension of the first member 10 and an outer dimension of the second member 20 are substantially the same. The second member 20 includes a second surface 21. The first surface 11 of the first member 10 and the second surface 21 of the second member 20 face each other. The second member 20 has a plurality of through holes 22. Each of the plurality of through holes 22 is a circular opening that passes through the second member 20. The plurality of through holes 22 are arranged in a matrix. A diameter of each of the plurality of through holes 22 is sufficiently larger than a diameter of each of the recesses on the first surface 11. Each of the plurality of through holes 22 has an inner surface that defines a space in which cells to be cultured are accommodated, the space being further defined by the first surface 11 of the first member 10 that constitutes a bottom surface of the space.

The adhesive layer 30 is interposed between the first member 10 and the second member 20. The adhesive layer 30 is a bonding material for bonding the first surface 11 and the second surface 21 to each other. The adhesive layer 30 is constituted of a laminate of a first layer 31 and a second layer 32. The first layer 31 is made of a first adhesive applied to the first surface 11. The second layer 32 is made of a second adhesive applied to the second surface 21. The first member 10 and the second member 20 are bonded to each other by bonding the first adhesive and the second adhesive to each other. The first adhesive is made of a material, and the second adhesive is made of a different material. Specifically, the first adhesive includes a silane coupling agent having functional groups, and the second adhesive includes another silane coupling agent having functional groups, and the functional groups of the silane coupling agent included in the first adhesive differs from the functional groups of the silane coupling agent included in the second adhesive.

The first adhesive includes a silane coupling agent having epoxy groups as functional groups (hereinafter referred to as an "epoxy silane coupling agent"). Examples of the epoxy silane coupling agent include 3-glycidoxypropyltrimethoxysilane having glycidyl groups including epoxy groups, and 2-(3,4-epoxycyclohexyl)ethyltrimethoxysilane having epoxy groups. As the epoxy silane coupling agent having glycidyl groups, 3-glycidoxypropylmethyldimethoxysilane, 3-glycidoxypropylmethyldiethoxysilane, or 3-glycidoxypropyltriethoxysilane, etc., may be used.

The second adhesive includes a silane coupling agent having amine groups as functional groups (hereinafter, referred to as an" amino silane coupling agent"). Examples of the amino silane coupling agent include 3-aminopropyltrimethoxysilane. As the amino silane coupling agent, for example, 3-aminopropyltriethoxysilane, N-2-(aminoethyl)-3-aminopropylmethyldimethoxysilane, or N-2-(aminoethyl)-3-aminopropyltrimethoxysilane, etc., may be used.

As shown in Fig. 2, by chemical bonds between the epoxy groups of the epoxy silane coupling agent (first adhesive) included in the first layer 31 of the adhesive layer 30 and the amino groups of the amino silane coupling agent (second adhesive) included in the second layer 32, the first member 10 and the second member 20 are bonded to each other. Specifically, a chemical bond is formed by reaction of two epoxy groups of the first layer 31 to one amino group of the second layer 32.

As described above, in this embodiment, the first member 10 and the second member 20 are bonded to each other by the adhesive layer 30 that includes the first layer 31 and the second layer 32, the first layer 31 being formed on the first surface 11 of the first member 10 made of silicone rubber, the second layer 32 being formed on the second surface 21 of the second member 20 made of polystyrene. The first layer 31 is made of the silane coupling agent having the epoxy groups, and the second layer 32 is made of the silane coupling agent having the amino groups. Thus, compared to a configuration in which the first member 10 and the second member 20 are bonded by a single type of silane coupling agent, it is possible to maintain a high level of durability of bonding of the first member 10 and the second member 20 to each other. In addition, an adhesive force of the adhesive layer 30 is improved; thus, it is possible to reduce infiltration of moisture, resulting in improved water resistance.

### B: Method for Producing Laminate 100

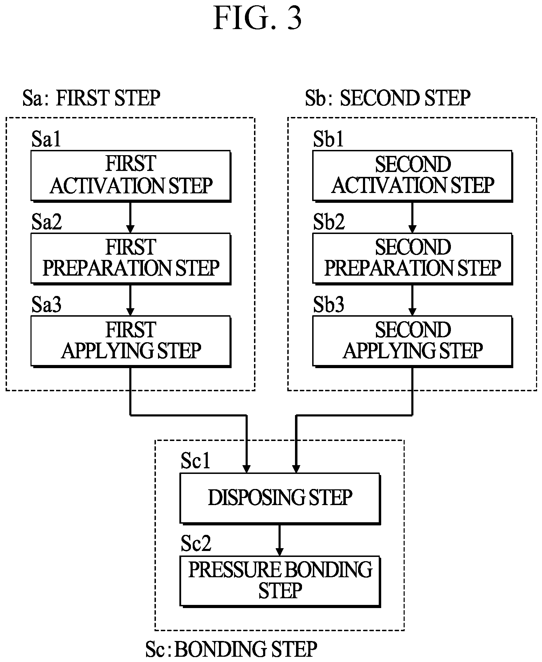

Fig. 3 is a flowchart showing a production procedure for the laminate 100. As shown in Fig. 3, a production process for the laminate 100 includes a first step Sa relating to the first member 10 and to the first layer 31, a second step Sb relating to the second member 20 and to the second layer 32, and a bonding step Sc of bonding the first member 10 and the second member 20 to each other.

### B1: First Step Sa

The first step Sa includes a first activation step Sa1, a first preparation step Sa2, and a first applying step Sa3. In Fig. 3, although a case is conveniently shown in which the first preparation step Sa2 is carried out after the first activation step Sa1 is carried out, a temporal relationship between the first activation step Sa1 and the first preparation step Sa2 may be freely selected. In other words, the first activation step Sa1 may be carried out after the first preparation step Sa2 is carried out, or alternatively, the first activation step Sa1 and the first preparation step Sa2 may be carried out in parallel.

In the first activation step Sa1, a surface treatment is carried out in which the first surface 11 of the first member 10 is activated by a light beam. Specifically, the surface treatment in the first activation step Sa1 is a treatment in which an excimer light (laser) beam (vacuum ultraviolet: VUV) is projected onto the first surface 11. Specifically, the excimer light beam is projected onto the first surface 11 over 15 seconds, for example.

In the first preparation step Sa2, the first adhesive is prepared that includes the epoxy silane coupling agent. Specifically, the first adhesive is produced by mixing the epoxy silane coupling agent and a solvent. The solvent is, for example, a mixed solution in which ethanol and water are mixed at a mixing ratio of 9 to 1, or a mixed solution in which isopropyl alcohol (IPA) and water are mixed at a mixing ratio of 9 to 1. However, the type of solvent is not limited to the above example. In the first preparation step Sa2, the first adhesive is prepared by mixing the epoxy silane coupling agent into the solvent, the first adhesive having an epoxy silane coupling agent concentration of 1 weight percent (wt%) or more and 10 weight percent or less.

After the first activation step Sa1 and the first preparation step Sa2 are carried out, the first applying step Sa3 is carried out. In the first applying step Sa3, the first adhesive is applied to the first surface 11 of the first member 10. For applying the first adhesive, a brush, a spray, or a roller, etc., may be used, for example. By dipping the first surface 11 of the first member 10 into the first adhesive, the first adhesive may be applied to the first surface 11. A specific example of the first step Sa is described above.

### B2: Second Step Sb

The second step Sb includes a second activation step Sb1, a second preparation step Sb2, and a second applying step Sb3. In Fig. 3, although a case is conveniently shown in which the second preparation step Sb2 is carried out after the second activation step Sb1 is carried out, a temporal relationship between the second activation step Sb1 and the second preparation step Sb2 may be freely selected. In other words, the second activation step Sb1 may be carried out after the second preparation step Sb2 is carried out, or alternatively, the second activation step Sb1 and the second preparation step Sb2 may be carried out in parallel.

In the second activation step Sb1, a surface treatment is carried out in which the second surface 21 of the second member 20 is activated by a light beam. Specifically, as in the first activation step Sa1, the surface treatment in the second activation step Sb1 is a treatment in which an excimer light beam is projected onto the second surface 21. Specifically, the excimer light beam is projected onto the second surface 21 over 30 seconds, for example. In other words, a period of time in which an excimer light beam is projected onto the second surface 21 in the second activation step Sb1 is longer than a period of time in which an excimer light beam is projected onto the first surface 11 in the first activation step Sa1. However, a specific period of time of the first activation step Sa1, a specific period of time of the second activation step Sb1, and a difference between the period of time of the first activation step Sa1 and the period of time of the second activation step Sb1 are not limited to the above example.

In the second preparation step Sb2, the second adhesive is prepared that includes the amino silane coupling agent. Specifically, the second adhesive is produced by mixing the amino silane coupling agent and a solvent. The solvent is, for example, a mixed solution in which ethanol and water are mixed at a mixing ratio of 9 to 1, or a mixed solution in which isopropyl alcohol (IPA) and water are mixed at a mixing ratio of 9 to 1. However, the type of solvent is not limited to the above example. In the second preparation step Sb2, the second adhesive is prepared by mixing the amino silane coupling agent into the solvent, the second adhesive having an amino silane coupling agent concentration of 1 weight percent or more and 10 weight percent or less.

After the second activation step Sb1 and the second preparation step Sb2 are carried out, the second applying step Sb3 is carried out. In the second applying step Sb3, the second adhesive is applied to the second surface 21 of the second member 20. As in the first applying step Sa3 described above, for applying the second adhesive, a brush, a spray, or a roller, etc., may be used, for example. By dipping the second surface 21 of the second member 20 into the second adhesive, the second adhesive may be applied to the second surface 21. A specific example of the second step Sb is described above.

### B3: Bonding Step Sc

The bonding step Sc is carried out after the first step Sa and the second step Sb are carried out. In the bonding step Sc, the first surface 11 of the first member 10 and the second surface 21 of the second member 20 are bonded to each other by the first adhesive and the second adhesive. The bonding step Sc is started about 5 minutes after the first step Sa and the second step Sb are terminated. The bonding step Sc includes a disposing step Sc1 and a pressure bonding step Sc2.

In the disposing step Sc1, the first member 10 and the second member 20 are disposed such that the first adhesive on the first surface 11 and the second adhesive on the second surface 21 are in contact with each other. In the disposing step Sc1, by blowing air on the first adhesive on the first surface 11 and on the second adhesive on the second surface 21, excess solutions are removed. In addition, in the disposing step Sc1, by removing foam between the first adhesive and the second adhesive, the first adhesive and the second adhesive are sufficiently adhered without any gap.

In the pressure bonding step Sc2, by pressing the first member 10 and second member 20 to each other while the first member 10 and second member 20 are heated, the first member 10 and second member 20 are bonded to each other. Specifically, while the first member 10 and the second member 20 are heated to a predetermined temperature within a range of 80 degrees Celsius or more and 90 degrees Celsius or less, the first member 10 and the second member 20 are pressed to each other at a pressure within a range of 0.002 megapascals or more and 1.2 megapascals or less, for example. In the pressure bonding step Sc2, the epoxy groups (glycidyl groups) of the epoxy silane coupling agent in the first adhesive and the amino groups of the amino silane coupling agent in the second adhesive are bonded to each other, and the first adhesive and the second adhesive are cured to form the adhesive layer 30.

As described above, in this embodiment, the first adhesive is applied to the first surface 11 of the first member 10 made of the silicone rubber, and the second adhesive is applied to the second surface 21 of the second member 20 made of the polystyrene. The first adhesive includes the silane coupling agent having the epoxy groups (glycidyl groups), and the second adhesive includes the silane coupling agent having the amino groups. Thus, compared to a configuration in which the first member 10 and the second member 20 are bonded to each other by a single type of silane coupling agent, it is possible to maintain a high level of durability of the bonding of the first member 10 and the second member 20 to each other.

In the technique described in Patent Document 1, it is necessary to carry out a corona discharge treatment, an ultraviolet irradiation treatment, or a plasma treatment, not only before application of an adhesive including a silane coupling agent, but also after the application. In contrast to the technique described in Patent Document 1, in this embodiment, by activating the first surface 11 and the second surface 21 with the excimer light beam before application of the adhesives, it is possible to firmly bond the first member 10 and the second member 20 to each other. In other words, after the application of the adhesives, it is not necessary to activate the first surface 11 and the second surface 21. Thus, there is an advantage in that the production process of the laminate 100 is simplified compared to the technique described in Patent Document 1.

### Examples

Examples of the present invention are described below. The following examples are each an aspect of the present invention. Thus, the scope of the present invention is not limited to the examples described below.

Table 1 is a diagram showing production conditions and evaluation test results of first to fifth examples according to the present invention. Table 2 is a diagram showing production conditions and evaluation test results of first to fifth reference examples to be compared to each of the examples. In each of the examples and in each of the reference examples, a PDMS sheet was used as the first member 10, the PDMS sheet having a shape of a rectangle that has a predetermined size (110 mm × 74 mm), and a polystyrene well plate was used as the second member 20, the polystyrene well plate having the same size (110 mm × 74 mm) as that of the first member 10. In Table 1 and Table 2, "PDMS" means the first member 10, and "POLYSTYRENE" means the second member 20.

**Table 1**

| | FIRST EXAMPLE | SECOND EXAMPLE | THIRD EXAMPLE | FOURTH EXAMPLE | FIFTH EXAMPLE |
|---|---|---|---|---|---|
| PDMS | GLYCIDYL GROUP | GLYCIDYL GROUP | GLYCIDYL GROUP | EPOXY GROUP | GLYCIDYL GROUP |
| POLYSTYRENE | AMINO GROUP | AMINO GROUP | AMINO GROUP | AMINO GROUP | AMINO GROUP |
| CONCENTRATION | 1 wt% | 5 wt% | 10 wt% | 1 wt% | 1 wt% |
| SOLVENT | 90% ETHANOL | 90&ETHANOL | 90%ETHANOL | 90%ETHANOL | 90%IPA |
| RESULT | ABSENCE OF DETACHMENT | ABSENCE OF DETACHMENT | ABSENCE OF DETACHMENT | ABSENCE OF DETACHMENT | ABSENCE OF DETACHMENT |

**Table 2**

| | FIRST REFERENCE EXAMPLE | SECOND REFERENCE EXAMPLE | THIRD REFERENCE EXAMPLE | FOURTH REFERENCE EXAMPLE | FIFTH REFERENCE EXAMPLE |
|---|---|---|---|---|---|
| PDMS | MIXTURE | NO APPLYING | GLYCIDYL GROUP | AMINO GROUP | GLYCIDYL GROUP |
| POLYSTYRENE | MIXTURE | AMINO GROUP | NO APPLYING | GLYCIDYL GROUP | THIOL GROUP |
| CONCENTRATION | 1 wt% | 1 wt% | 1 wt% | 1 wt% | 1 wt% |
| SOLVENT | 90%ETHANOL | 90%ETHANOL | 90% ETHANOL | 90%ETHANOL | 90%ETHANOL |
| RESULT | PRESENCE OF DETACHMENT | PRESENCE OF DETACHMENT | PRESENCE OF DETACHMENT | PRESENCE OF DETACHMENT | PRESENCE OF DETACHMENT |

In Table 1 and Table 2, "GLYCIDYL GROUP" means an epoxy silane coupling agent having glycidyl groups. Specifically, a 3-glycidoxypropyltrimethoxysilane (product code: DOWSIL Z-6040) manufactured by DOW Inc., was used as the epoxy silane coupling agent. In Table 1, "EPOXY GROUP" means an epoxy silane coupling agent having epoxy groups. Specifically, a 2-(3,4-epoxycyclohexyl) ethyltrimethoxysilane (product code: E0327) manufactured by Tokyo Chemical Industry (TCI) Co., Ltd., was used as the epoxy silane coupling agent.

In Table 1 and Table 2, "AMINO GROUP" means an amino silane coupling agent having amino groups. Specifically, a 3-aminopropyltrimethoxysilane (product code: A0439) manufactured by Tokyo Chemical Industry (TCI) Co., Ltd., was used as the amino silane coupling agent. In Table 2, "THIOL GROUP" means a silane coupling agent having thiol groups as functional groups. Specifically, a (3-mercaptopropyl)trimethoxysilane (product code: M0928) manufactured by Tokyo Chemical Industry (TCI) Co., Ltd., was used as the "THIOL GROUP" shown in Table 2.

Details of the examples follow.

### First Example

In the first example 1, the epoxy silane coupling agent having the glycidyl groups (3-glycidoxypropyltrimethoxysilane) was applied to the first surface 11 of the first member 10, and the second adhesive including the amino silane coupling agent (3-aminopropyltrimethoxysilane) was applied to the second surface 21 of the second member 20. In each of the first adhesive and the second adhesive, a mixed solution in which ethanol and water were mixed at a mixing ratio of 9 to 1 was used as a solvent, and a silane coupling agent concentration was set to 1 weight percent. In addition, in a state in which the first member 10 to which the first adhesive was applied and the second member 20 to which the second adhesive was applied were heated to 80 degrees Celsius, the first member 10 and the second member 20 were pressed to each other at a pressure of 1.2 megapascals (weighted 1 ton) to be bonded to each other.

### Second Example

In the second example, the silane coupling agent concentration of each of the first adhesive and the second adhesive was changed from 1 weight percent in the first example to 5 weight percent. In the second example, conditions other than the silane coupling agent concentration were the same as those in the first example.

### Third Example

In the third example, the silane coupling agent concentration of each of the first adhesive and the second adhesive was changed from 1 weight percent in the first example to 10 weight percent. In the third example, conditions other than the silane coupling agent concentration were the same as those in the first example.

### Fourth Example

In the fourth example, the silane coupling agent in the first adhesive was changed to a 2-(3,4-epoxycyclohexyl)ethyltrimethoxysilane having epoxy groups. In the fourth example, conditions other than the silane coupling agent in the first adhesive were the same as those in the first example.

### Fifth Example

In the fifth example, the solvent of each of the first adhesive and the second adhesive was changed to a mixed solution in which isopropyl alcohol and water were mixed at a mixing ratio of 9 to 1. In the fifth example, conditions other than the solvent were the same as those in the first example.

Details of the reference examples follow.

### First Reference Example

In the first reference example, an adhesive (hereinafter referred to as a "mixed adhesive") in which an epoxy silane coupling agent (3-glycidoxypropyltrimethoxysilane) and an amino silane coupling agent (3-aminopropyltrimethoxysilane) were mixed was used for bonding the first member 10 and the second member 20 to each other. Specifically, the mixed adhesive was applied to both the first surface 11 of the first member 10 and the second surface 21 of the second member 20 to bond the first member 10 and the second member 20 to each other. In the first reference example, conditions other than the adhesive were the same as those in the first example.

### Second Reference Example

In the second reference example, the first member 10 and the second member 20 were bonded to each other by use of only an amino silane coupling agent (3-aminopropyltrimethoxysilane). Specifically, the first member 10 and the second member 20 were bonded to each other by the amino silane coupling agent applied to the second surface 21 of the second member 20. No adhesive was applied to the first surface 11 of the first member 10. In the second reference example, conditions other than the adhesive were the same as those in the first example.

### Third Reference Example

In the third example, the first member 10 and the second member 20 were bonded to each other by use of only an epoxy silane coupling agent (3-glycidoxypropyltrimethoxysilane). Specifically, the first member 10 and the second member 20 were bonded to each other by the epoxy silane coupling agent applied to the first surface 11 of the first member 10. No adhesive was applied to the second surface 21 of the second member 20. In the third reference example, conditions other than the adhesive were the same as those in the first example.

### Fourth Reference Example

In the fourth reference example, the second adhesive including the amino silane coupling agent (3-aminopropyltrimethoxysilane) was applied to the first surface 11 of the first member 10, and the epoxy silane coupling agent having the glycidyl groups (3-glycidoxypropyltrimethoxysilane) was applied to the second surface 21 of the second member 20. In other words, the silane coupling agent applied to the first member 10 in the fourth reference example was applied to the second member 20 in the first example, and the silane coupling agent applied to the second member 20 in the fourth reference example was applied to the first member 10 in the first example. In the fourth reference example, conditions other than the adhesive were the same as those in the first example.

### Fifth Reference Example

In the fifth reference example, an epoxy silane coupling agent having glycidyl groups (3-glycidoxypropyltrimethoxysilane) was applied to the first surface 11 of the first member 10, and a silane coupling agent having thiol groups ((3-mercaptopropyl)trimethoxysilane) was applied to the second surface 21 of the second member 20. In other words, a type of silane coupling agent applied to the second surface 21 was changed from that in the first example. In the fifth reference example, conditions other than the adhesive were the same as those in the first example.

For the examples and reference examples described above, evaluation tests were carried out to evaluate durability. The evaluation tests were tests for evaluating durability of the bonding of the first member 10 and the second member 20 to each other and for evaluating water resistance of the adhesives, and each of the evaluation tests was carried out in a state in which a sample according to each of the examples and reference examples described above was immersed in water at 50 degrees Celsius. Specifically, a process of applying an external force such as a tensile force to the sample every 24 hours was carried out over 7 days, and then it was determined whether detachment of the first member 10 from the second member 20 occurred. In the following Tables, "RESULT" means presence or absence of detachment occurred in the evaluation test.

As will be understood from Table 1 and Table 2, detachment of the first member 10 from the second member 20 occurred in the first to fifth reference examples, whereas detachment of the first member 10 from the second member 20 did not occur in the first to fifth examples.

By comparison of the first reference example and the first to fifth examples, it was confirmed that the adhesive in which the epoxy silane coupling agent and the amino silane coupling agent were mixed with each other was not able to sufficiently ensure durability of the bonding of the first member 10 and the second member 20 to each other. In other words, it was confirmed that it was possible to sufficiently ensure the durability of the bonding of the first member 10 and the second member 20 to each other in a case in which the first member 10 and the second member 20 were bonded to each other after only the epoxy silane coupling agent was applied to one of the members (the first member 10 and the second member 20), which are each made of a material different from a material for the other of the members, and only the amino silane coupling agent was applied to the other of the members, as in the first to fifth examples.

By comparison of the second and third reference examples and the first to fifth examples, it was confirmed that it was not possible to sufficiently ensure the durability of the bonding of the first member 10 and the second member 20 to each other in a case in which the epoxy silane coupling agent or the amino silane coupling agent was used alone. In other words, it was confirmed that it was possible to sufficiently ensure the durability of the bonding of the first member 10 and the second member 20 to each other in a case in which both the epoxy silane coupling agent and the amino silane coupling agent were used, as in the first to fifth examples.

By comparison of the fourth reference example and the first to fifth examples, it was confirmed that it was not possible to sufficiently ensure the durability of the bonding of the first member 10 and the second member 20 to each other in a configuration in which the amino silane coupling agent was applied to the first surface 11 of the first member 10 made of silicone rubber, and the epoxy silane coupling agent was applied to the second surface 21 of the second member 20 made of polystyrene. In other words, it was confirmed that it was possible to sufficiently ensure the durability of the bonding of the first member 10 and the second member 20 to each other in a combination between the first adhesive made of the epoxy silane coupling agent being applied to the first member 10 made of the silicone rubber and the second adhesive made of the amino silane coupling agent being applied to the second member 20 made of the polystyrene, as in the first to fifth examples.

By comparison of the fifth reference example and the first to fifth examples, it was confirmed that it was not possible to sufficiently ensure the durability of the bonding of the first member 10 and the second member 20 to each other in a configuration in which a silane coupling agent other than the amino silane coupling agent was used as the silane coupling agent applied to the second member 20. In other words, it was confirmed that it was possible to sufficiently ensure the durability of the bonding of the first member 10 and the second member 20 to each other in a configuration in which the amino silane coupling agent was used as the second adhesive applied to the second member 20, as in the first to fifth examples.

According to the first to third examples, it was confirmed that it was possible to sufficiently ensure the durability of the bonding of the first member 10 and the second member 20 to each other in a configuration in which the first adhesive and the second adhesive each have a silane coupling agent concentration within a range of 1 weight percent or more and 10 weight percent or less.

According to the fourth example, it was confirmed that it was possible to sufficiently ensure the durability of the bonding of the first member 10 and the second member 20 to each other not only in a configuration in which the epoxy silane coupling agent having glycidyl groups as functional groups was used as the first adhesive, but also in a configuration in which the epoxy silane coupling agent having no glycidyl group, was used as the first adhesive.

According to the fifth example, it was confirmed that it was possible to sufficiently ensure the durability of the bonding of the first member 10 and the second member 20 to each other not only in a configuration in which the mixed solution in which ethanol and water were mixed was used as the solvent of each of the first adhesive and the second adhesive, but also in a configuration in which the mixed solution in which isopropyl alcohol and water were mixed was used as the solvent of each of the first adhesive and the second adhesive.

### D: Modifications

Specific modified modes that may be applied to each of the modes described above are described below. Two or more modifications freely selected from the following modifications may be combined as long as no conflict arises from such combination.

(1) In the foregoing embodiment, a temporal relationship between the first step Sa and the second step Sb may be freely selected. In other words, the second step Sb may be carried out after the first step Sa is carried out, or alternatively, the first step Sa may be carried out after the second step Sb is carried out. A part or all of the first step Sa and a part or all of the second step Sb may be carried out in parallel.

As will be understood from the above examples, terms "first" and "second" in the present application are used only as formal and convenient labels to distinguish elements from each other, and have no substantial meaning. Specifically, the terms "first" and "second" do not mean positions of the elements or an order of production of the elements. Thus, there is no room for narrowly interpreting a step to which "first" is appended as being carried out before a step to which "second" is appended.

(2) In the foregoing embodiment, the well plate used for culturing cells is indicated as the laminate 100, but use of the laminate 100 produced by the production process shown in Fig. 3 is not limited to the above example. A shape of, or a size of, each of the first member 10 and the second member 20 may be freely changed depending on a use of the laminate 100. For example, the through holes 22 described above may not be required.

### Description of Reference Signs

100... laminate, 10... first member, 11... first surface, 20... second member, 21... second surface, 22... through hole, 30... adhesive layer, 31... first layer, 32... second layer.

## Claims

1. A laminate comprising:
a first member made of silicone rubber;
a second member made of polystyrene; and
an adhesive layer bonding a first surface of the first member and a second surface of the second member to each other,
wherein the adhesive layer includes:
a first layer disposed on the first surface, the first layer being made of a silane coupling agent having epoxy groups; and
a second layer disposed on the second surface, the second layer being made of a silane coupling agent having amino groups.

2. A method for producing a laminate, the method comprising:
a first applying step of applying a first adhesive to a first surface of a first member, the first member being made of silicone rubber, the first adhesive including a silane coupling agent having epoxy groups;
a second applying step of applying a second adhesive to a second surface of a second member, the second member being made of polystyrene, the second adhesive including a silane coupling agent having amino groups; and
a bonding step of the first surface of the first member and the second surface of the second member to each other with the first adhesive and the second adhesive.

3. The method for producing the laminate according to claim 2,
wherein the first adhesive includes the silane coupling agent having the epoxy groups, a concentration of the silane coupling agent having the epoxy groups being within a range of 1 weight percent or more and 10 weight percent or less, and
wherein the second adhesive includes the silane coupling agent having the amino groups, a concentration of the silane coupling agent having the amino groups being within a range of 1 weight percent or more and 10 weight percent or less.

4. The method for producing the laminate according to claim 2 or 3, further comprising:
a first activation step of projecting an excimer light beam onto the first surface before the first applying step is carried out; and
a second activation step of projecting an excimer light beam onto the second surface before the second applying step is carried out.

5. The method for producing the laminate according to any one of claims 2 to 4, wherein the first adhesive and the second adhesive each include, as a solvent, a mixed solution in which ethanol and water are mixed at a mixing ratio of 9 to 1.

6. The method for producing the laminate according to any one of claims 2 to 5, wherein the silane coupling agent having the epoxy groups is a silane coupling agent having glycidyl groups.
